# EUROPEAN PATENT SPECIFICATION

(11) **EP 1 125 357 B1**
(45) Date of publication and mention of the grant of the patent: **16.04.2003**
(21) Application number: 98956652.6
(22) Date of filing: 06.11.1998
(51) Int. Cl.: H02N 1/00, F15C 5/00

(54) **DRIVING METHOD FOR ELECTROSTATIC ACTUATORS**
ANSTEUERUNGSVERFAHREN FÜR ELEKTROSTATISCHE BETÄTIGER
PROCEDE D'ATTAQUE DE DISPOSITIFS DE COMMANDE ELECTROSTATIQUES

(43) Date of publication of application: 22.08.2001
(73) Proprietor: Honeywell Inc., Morristown, New Jersey 07962 (US)
(72) Inventor: CABUZ, Cleopatra, Edina, MN 55439 (US); CABUZ, Eugen, Edina, MN 55439 (US)
(74) Representative: Haley, Stephen
(86) International application number: US9823677
(87) International publication number: WO00028651

(56) References cited:
- EP-A- 0 865 151
- TOSHIKI NIINO ET AL: "HIGH-POWER AND HIGH-EFFICIENCY ELECTROSTATIC ACTUATOR" PROCEEDINGS OF THE WORKSHOP ON MICRO ELECTRO MECHANICAL SYSTEMS (ME, FORT LAUDERDALE, FEB. 7 - 10, 1993, no. WORKSHOP 6, 7 February 1993, pages 236-241, XP000366886 INSTITUTE OF ELECTRICAL AND ELECTRONICS ENGINEERS

## Description

### FIELD OF THE INVENTION

The present invention relates to a driving device and method for driving electrostatic actuators. More particularly the invention relates to a driving device and method using a compounded AC signal.

### BACKGROUND OF THE INVENTION

Electrostatic actuators have become selected and are the solution of choice for actuators that employ low power, operate at high speed, require low cost to produce, and are of small size. These devices present significant advantages: over thermal devices by requiring much less power; over electromagnetic devices using less power and having smaller size; or piezoelectric actuators that have a higher cost and have a much smaller amplitude of motion.

To date, however, there are no commercially available electrostatic actuators. Of particular concern is electrostatic actuation in the presence of dielectrically isolated electrodes, where specific problems are incurred.

In electrostatic actuators, the desired displacement is the result of the attractive electrostatic force generated by the interaction between a distribution of opposite sign charges placed on two bodies, one of which is moveable. For the purposes of this invention, these two bodies are known as actuator plates. The actuator plates are placed apart by a predetermined distance. The charge distribution is then generated by applying a potential difference between two conductive electrodes that are part of the actuator plates. The actuator will be in the ON state or mode when a potential difference is applied between the electrodes and the two plates move toward each other. The actuator will be in the OFF state when the electrodes are at the same potential (shorted).

A DC voltage is theoretically capable of inducing the "ON" state of the actuation cycle. Practical problems, however, limit the application of a DC voltage for the actuation of some electrostatic actuators. In real devices, DC driving shows memory effects, such that the behavior of the actuators depends strongly on the history of the actuation process. DC driving also induces stiction (1) through charges injected in the dielectric at the dielectric/metal electrode interface, and (2) through charges trapped at the dielectric/air interface.

Using an AC signal for inducing the ON state of an electrostatic actuator is also possible and it can remove the drawbacks of the DC driving.

Sine wave AC drive has been considered and found to have some detrimental properties. Sine wave AC drive does not generate the steady level of electrostatic pressure required in many applications. The displacement of the actuator plate/plates tends to follow the sine wave applied voltage, resulting in an undesired vibratory motion when the AC sine wave voltage is applied. To overcome this drawback a multiphase/multielectrode driving scheme can be used. This method results however in complicated structures and limited force. Square wave AC driving can provide high and steady electrostatic forces. However, it can also produce premature stiction that adversely affects performance sooner than would permit many practical devices to operate with reasonable life expectancy.

One family of patents describes fluid control employing micro miniature valves, sensors and other components using a main passage between one inlet and exit port and additionally a servo passage between inlet and outlet ports. The servo passage is controlled by a control flow tube such that tabs are moved electrostatically. United States Patent No. 5,176,358 to Bonne et al teaches such a fluid regulating device, while divisional United States Patent Nos. 5,323,999 and 5,441,597 relate to alternative embodiments.

The actual electrostatic device is only briefly described in the above patents, wherein at least one tab formed as part of a dielectric layer moves toward and away from an aperture upon activation of a means for varying the potential of at least one electrode associated therewith to generate an electrostatic force.

The above referenced patents identify another family of patents for further information on microvalves using electrostatic forces. The pending U.S. patent application referred to in those first discussed patents has matured into United States Patent No. 5,082,242 to Bonne et al. This patent describes a microvalve that is an integral structure made on one piece of silicon such that the device is a flow through valve with inlet and outlet on opposite sides of the silicon wafer. The valves are closed by contact with a valve seat where surfaces must be matched in order to avoid degradation of valve performance. Two patents, United States Patent Nos. 5,180,623 and 5,244,527 are divisional patents relating to the first patent. These patents generally describe operation of the electrostatic valve as being driven by various kinds of voltage sources. Specifically, the valve is said to operate as a two position valve with fully open and fully closed positions by applying a DC voltage between electrodes. Also, operation as a proportional control valve is disclosed as being effected by applying a voltage proportional to the voltage necessary to close the valve. Finally, These patents describe operation of the valve with a pulse width modulated voltage signal to modulate gas flow through the valve.

In some electrostatic actuators, the actuator plates have to come in intimate contact during the normal operation cycle. These actuators are sometimes referred to as touch-mode electrostatic actuators. In order to prevent electrical shorting during the touch phase of the operation cycle, the conductive electrodes are isolated from each other by dielectric layers. In order to get the maximum work from a specific device, large electric fields are usually developed between the two conductive electrodes. The non-linear character of the electrostatic attraction results in a snapping action, where the actuator plates move toward each other with accelerations as high as 10⁸ g and speeds that exceed 10³ m/sec. After the impact, the free surfaces of the actuator plates are pushed against each other by the large electrostatically generated pressure. This operation mode creates the possibility of very large mechanical impact and strong interaction forces being developed between the actuator plates. Some of these forces can continue to act after removal of the potential difference between the actuator plates. In some cases, these forces are stronger than the restoring forces available for bringing the electrodes in their original position. In such a case, the two electrodes remain temporarily or permanently attached and the actuator stops functioning as intended and desired. This condition is sometimes referred to as 'stiction.'

The main forces producing stiction in electrostatic actuators are surface interaction forces (solid bridging, Van der Waals forces, hydrogen bonds) and electrostatic forces . produced by charges permanently or temporarily trapped into the dielectrics. To reduce the surface interaction forces, two approaches may be used. The first, reducing the contact area, requires more sophisticated structures and gives up some of the available electrostatic force. The second, reducing the surface energy of the layers in contact, has not yet been successfully demonstrated for devices based on that concept.

During the lifetime of an actuator, the large mechanical impact and the large electrostatic pressure can gradually increase the real contact area between the actuator plates and enhance the surface interaction forces.

It would be of great advantage to the art if this buildup could be reduced or avoided altogether.

It would be another great advance in the art if an improved driving method for electrostatic actuators could be provided for use with any actuator and configuration of the physical components thereof.

Other advantages will appear hereinafter.

### SUMMARY OF THE INVENTION

It has now been discovered that the above and other objects of the present invention may be accomplished by an electrostatic actuator in accordance with the appended claim 1, a touch-mode electrostatic actuator in accordance with claim 10 and a method of driving an electrostatic actuator in accordance with claim 18. Specifically, the present invention comprises an actuator drive producing a compounded AC signal with three different sections, called Section I or the Rise Section, Section II or the Nominal Section, and Section III or the Fall Section. The nominal section will serve as the actual force generating section while the rise and fall sections will serve as transition sections between the zero signal and the nominal amplitude of the AC signal. This drive results in an overall increase of the actuator life time as a result of reducing charging and reducing the mechanical impact at the contact between actuator parts. The signals used in the different sections may be square-wave, sine wave, triangular wave or mixed signals.

The device is used in electrostatic actuators that have at least one pair of actuator plates and electrodes for conducting a voltage potential thereto. At least one of the pair is movable with respect to the other. The plates are positioned to move upon application of a voltage potential through the electrodes. A driving means provides a voltage potential to the electrodes to cause the movement of the at least one plate.

The driving means of this invention produces a compounded AC signal with the following structure. The signal in section II or the nominal section is a square wave AC signal. This signal is able to generate a steady electrostatic force. The amplitude and the frequency of this signal are selected according to the mechanical and electrical characteristics of the particular application. An example of the above signal would be: amplitude of the square wave AC signal 60V peak-to-peak and frequency of 250Hz. In some applications, where life time requirements are modest (several hundreds of thousands of actuations cycles) this section of the signal can stand alone.

The signals in sections I and III do not have to generate a significant electrostatic force but to ensure a slow increase/decrease of the amplitude of the electrical signal. The increase/decrease can be considered slow if the time for the signal to go from zero to its maximum value is at least 10 to 100 times longer than the mechanical response time of the actuator. In this way, the displacement of the actuator will be able to follow the applied voltage. Signals satisfying these requirements are the amplitude modulated square wave, sine wave or triangular wave signals. The amplitude modulation can follow a desired time dependence such as, but not limited to, a linear exponential or sinusoidal function. The number of cycles of the AC signal in sections I and III can be varied according to the response time and power requirements of the particular application. A preferred embodiment is to have more than 20 cycles.

When sine wave or triangular wave signals are used in section I and/or III of the compounded signal, that section can be reduced to a quarter of a full AC cycle. This allows a significant reduction of the response time and of the power consumption of the device, keeping at the same time the advantages of reduced mechanical impact and reduced charging.

The preferred circuit produces an actuation cycle having an amplitude increasing from zero to the desired final value through a plurality of individual periods of the basic AC signal and an amplitude decreasing from a nominal final value to zero through a similar plurality of individual periods of the basic AC signal.

The detailed structure of the rise/fall sections and the frequency of the AC signal can be modified over a wide range of values to fit the speed and power requirements of the specific application. It is intended that the specific frequency of the AC signal and the times of the rise/fall sections be adjusted to minimize stiction between said actuator plates.

### BRIEF DESCRIPTION OF THE DRAWINGS

For a more complete understanding of the invention, reference is hereby made to the drawings, in which:
FIGS. 1-5 are graphical illustrations of voltage over time, illustrating various driving signals to be used in electrostatic actuators, all in accordance with this invention; and
Figure 6 is a block diagram of one embodiment demonstrating implementation of the driving circuit of this invention.

### DETAILED DESCRIPTION OF THE PREFERRED EMBODIMENT

The present invention provides an improved electrostatic actuator with thousands of times the life operating time when compared with an identical actuator driven with a DC signal and more than 20 times when compared with a regular square wave signal.

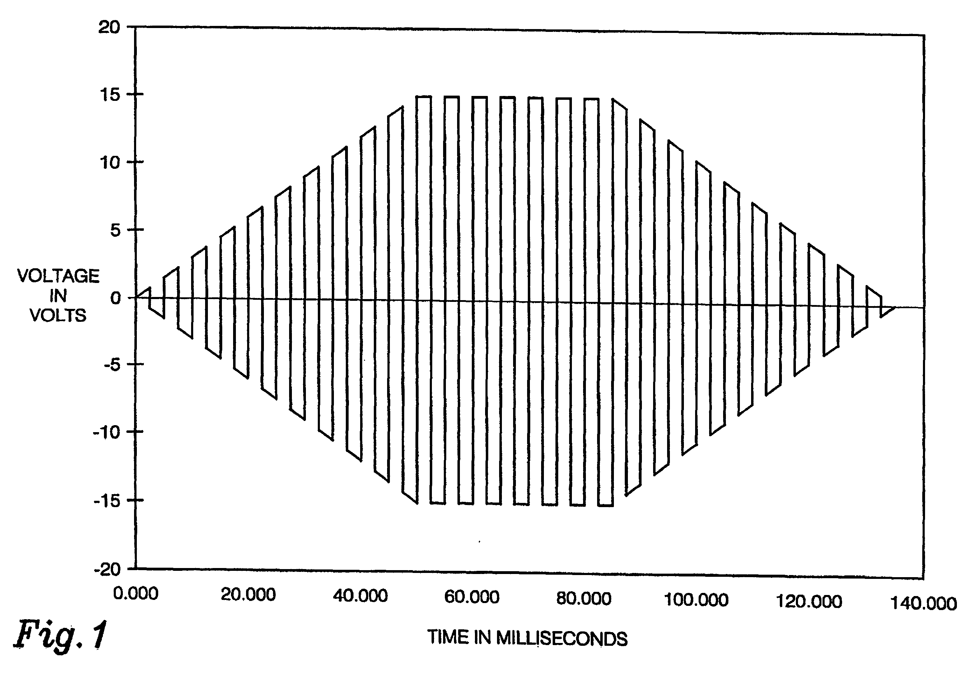

As shown in FIG. 1, the shape of the driving signal of the present invention is a signal compounded of three different sections: the rise section comprising a square-wave AC signal with a linearly increasing amplitude; the nominal section comprising a regular square wave signal with constant amplitude; the fall section comprising a square wave AC signal with a linearly decreasing amplitude. The time of the rise and fall sections of the signal is substantially longer than a period of the AC signal. This results in reduced charging and reduced mechanical impact at the contact between the actuator parts.

As can be seen in FIG. 1, the square-wave signal has a rise section of about 50 milliseconds (ms) and is much longer than one period of the signal. The fall section, also of about 50 ms, is extended for a similar time compared to the period of the signal.

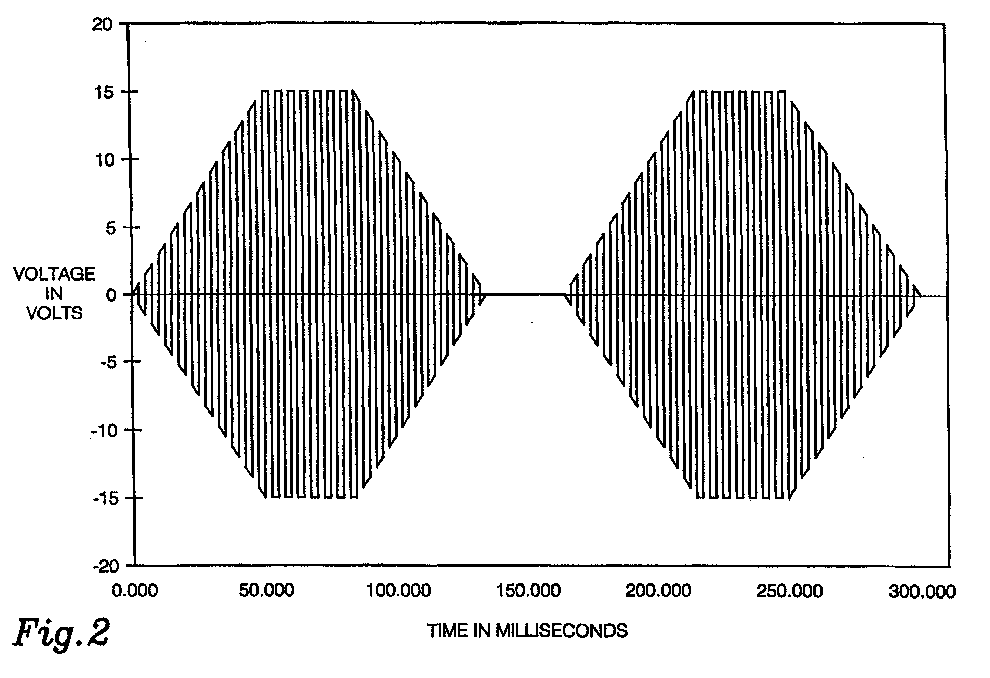

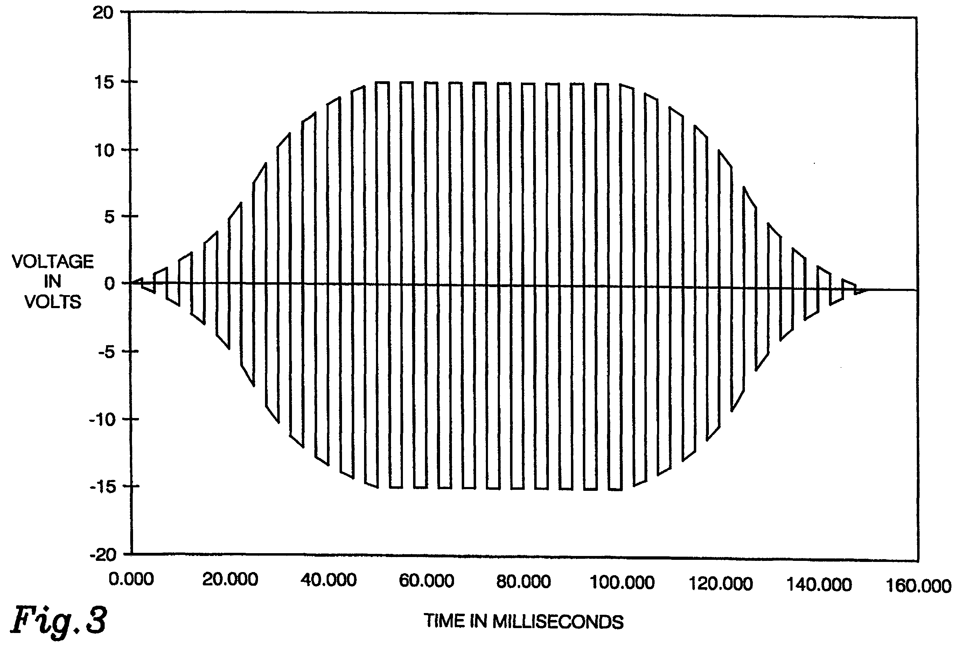

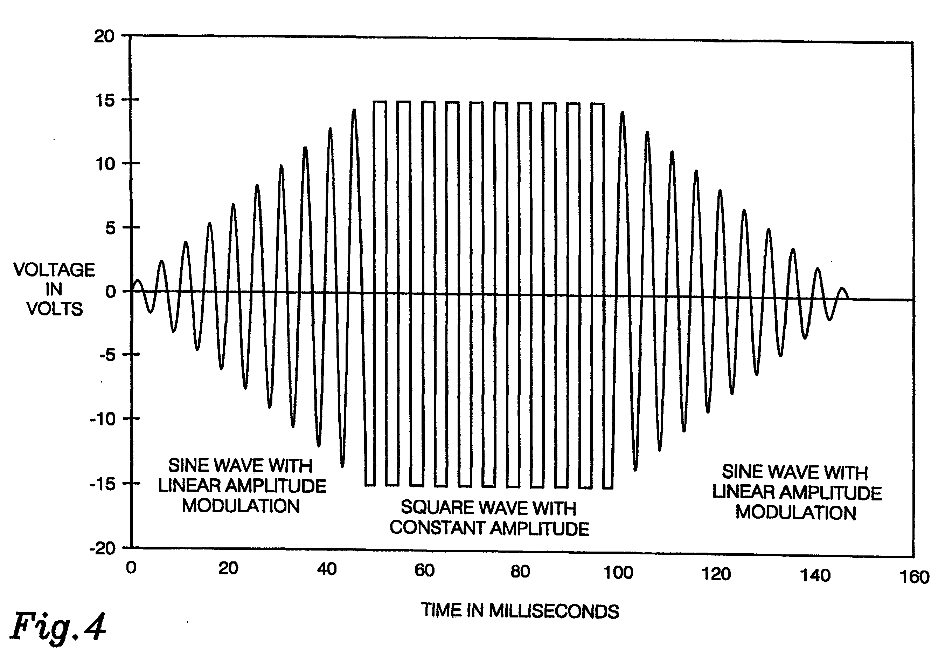

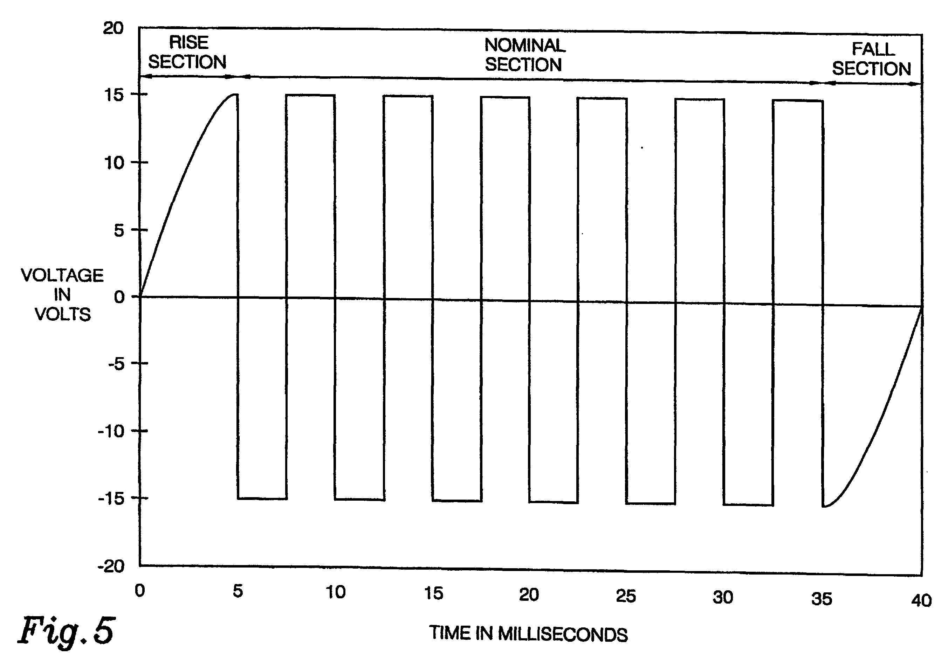

FIG. 2 illustrates a similar graphical representation of a linear amplitude modulation, this time showing a change in the phase of the signal at each subsequent ON state of the actuation cycle. Long rise and fall sections compared to the period of this signal is also clearly shown. FIG. 3 is an alternative embodiment in which a sinusoidal amplitude modulation is illustrated, again with long rise/fall sections compared to the period of the signal. FIG. 4 illustrates a combined sine/square wave driving voltage with linear amplitude modulation, all in accordance with the invention. FIG. 5 illustrates the particular case of the compounded sine/square wave driving voltage where the rise and the fall sections of the signal are realized each through only one quarter of a full AC cycle.

The driving signal frequency and amplitude and the time of the rise/fall sections of the compound signal can be adjusted in a wide range according to the application of the invention to a specific device. While not serving as limitations on the scope of variations, one example is a square wave frequency of 250 Hz with a peak-to-peak amplitude of 70V and rise/fall times of 0.1 seconds each. Alternatively, as an example only, a square wave frequency of 1.6kHz and rise/fall times of 0.02 seconds each can be used. In each case, the specific values for frequency, amplitude and rise/fall times will be determined by the specific application of the invention.

In accordance with the invention, and the signal generated thereby, the time of the rise/fall sections can be between one quarter of a period of the driving signal and several times the period of the AC signal. It is preferred that the rise/fall times be at least twenty times longer, as this assists in reducing the mechanical impact at the onset of the actuation voltage and allows improved charge evacuation at the removal of the actuation voltage. This has not been possible prior to the present invention.

While a variety of circuits may be used to generate the signals of the present invention, the circuit must be able to start an actuation cycle with an amplitude increasing from zero to the desired final value through a sufficient number of individual periods of the basic AC signal. The end of each actuation cycle also must go through a decrease of the amplitude of the AC signal from the nominal value to zero, again through a sufficient number of periods of the basic AC signal.

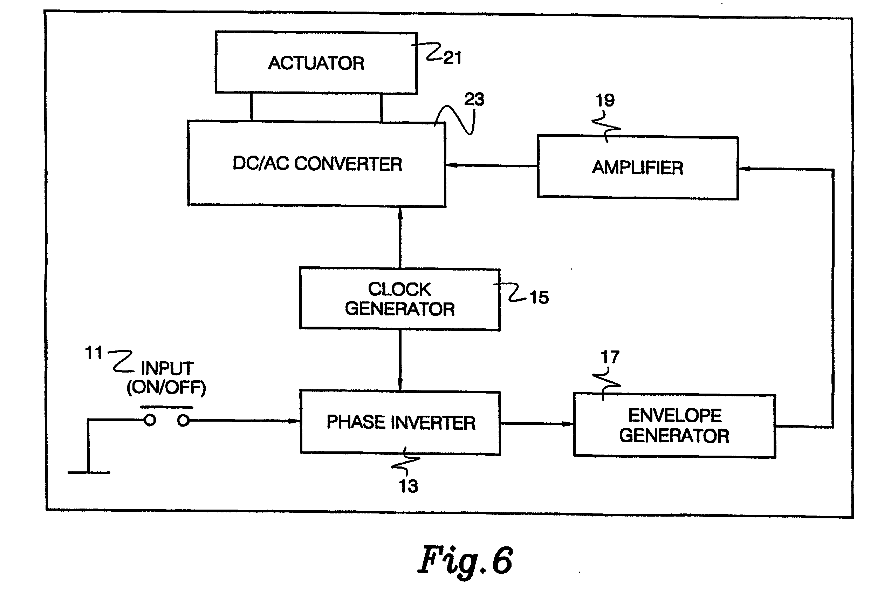

FIG. 6 illustrates implementation of one circuit that has been used to generate a desired driving signal in accordance with the present invention, though the invention is not limited in any way by this particular circuit.

The signal generated by the circuit of FIG. 6 has a frequency of the square wave of 250 Hz. The nominal amplitude of the square wave is 70 volts peak-to-peak. The rise time and fall time are both 0.1 seconds. The modulating frequency used to produce the actual motion of the actuator is about 1 Hz.

As shown in FIG. 6, the voltage at input 11 is subjected to phase inversion 13, which signal then reaches both clock generator 15 and envelope generator 17. The signal from the envelope generator 17 is amplified 19 and processed into the actuator 21 by DC/AC converter 23, subject to the signal from clock generator 15. Such a device was used to produce the signals shown in FIGS. 1-4 and to operate the tests set forth below.

To demonstrate the efficacy of the present invention, six identical touch mode electrostatic actuators were prepared, each as an array of 25 individual flaps that were actuated at a 1 Hz. actuation rate. Six devices were driven: (1) three with the driving signal of the present invention as illustrated in FIG. 1; and (2) three with a regular square wave having rise and fall times shorter than the mechanical response time of the actuator, and much smaller than the period of the AC driving signal. The devices driven by the signal of the present invention went through over 8,000,000 ON/OFF cycles without any failure of any kind. The compared devices driven with the regular square wave showed non-synchronous movement of 90% of the flaps. Eventually, stiction was observed in 60% of the flaps after only 400,000 cycles. There was massive failure after about 350,000 cycles, where 30% of the flaps failed during the first 350,000 cycles and another 30 % failed during the next 50,000 cycles. Similar devices driven with a DC voltage show stiction after a few actuation cycles. This is substantial proof that the present invention does in fact reduce mechanical impact and stiction.

As will become apparent from the foregoing detailed description, the present invention is admirably suited for use in almost any electrostatic actuators. Of particular advantage in touch mode application, the invention is useful in electrostatic actuators used as valves, pumps, switches, shutters, wobble motors, and many similar devices. Such devices will have a far superior ability to function and last over a longer period of time because of the present invention's ability to reduce mechanical impact between actuator plates and reduce stiction by selection of an optimum driving voltage. While particular embodiments of the present invention have been illustrated and described, it is not intended to limit the invention, except as defined by the following claims.

## Claims

1. An electrostatic actuator, comprising;
a pair of actuator plates having electrodes for conducting a voltage potential thereto and at least one of said pair being movable with respect to the other, said plates being positioned to move upon application of a voltage potential thereto by electrodes attached thereto; and
driving means for providing a voltage potential to said electrodes to cause said movement, said driving means producing a compound AC signal comprising a rise section, a nominal section in which the AC signal has its nominal amplitude, and a fall section, with the rise and fall sections each at least 10 to 100 times the mechanical response time of the actuator.

2. The device of claim 1, wherein the rise/fall sections are more than twenty times the period of said AC signal.

3. The device of claim 1, wherein the rise/fall sections are a quarter of a full period of said AC signal.

4. The device of claim 1, wherein only the nominal section of the compound AC signal is used for driving the actuator.

5. The device of claim 1, wherein said AC signal is selected from square-wave, sine wave, triangular wave and mixtures thereof.

6. The device of claim 1, wherein said driving means is a driving circuit, said circuit producing an actuation cycle having a rise section with the signal amplitude increasing from zero to the desired final value through a plurality of individual periods of the basic AC signal.

7. The device of claim 1, wherein said driving means is a driving circuit, said circuit producing an actuation cycle having a fall section with the signal amplitude decreasing from a nominal final value to zero through a plurality of individual periods of the basic AC signal.

8. The device of claim 1, wherein said driving means is a driving circuit, said circuit producing an actuation cycle having a rise section with the signal amplitude increasing from zero to the desired final value through a plurality of individual periods of the basic AC signal and a fall section with the signal amplitude decreasing from a nominal final value to zero through a similar plurality of individual periods of a basic AC signal.

9. The device of claim 1, where said electrostatic actuator is a touch-mode electrostatic actuator.

10. A touch-mode electrostatic actuator comprising: a pair of actuator plates having electrodes for conducting a voltage potential thereto and at least one of said plates being movable with respect to the other, said plates being positioned to move upon application of a voltage potential thereto by electrodes attached thereto; and a driving means for providing a voltage potential to said electrodes to cause said movement; wherein:
the driving means is adapted to produce a compounded AC signal comprising a rise section, a nominal section in which the AC signal has its nominal amplitude, and a fall section, with the rise and fall sections each at least 10 to 100 times the mechanical response time of the actuator.

11. The device of claim 10, wherein the rise/fall sections are more than twenty times the period of said AC signal.

12. The device of claim 10, wherein the rise/fall sections are a quarter of a full period of said AC signal.

13. The device of claim 10, wherein only the nominal section of the compound AC signal is used for driving the actuator.

14. The device of claim 10, wherein said AC signal is selected from square-wave, sine wave, triangular wave and mixtures thereof.

15. The device of claim 10, wherein said driving means is a driving circuit, said circuit producing an actuation cycle having an amplitude increasing from zero to the desired final value through a plurality of individual periods of the basic AC signal.

16. The device of claim 10, wherein said driving means is a driving circuit, said circuit producing an actuation cycle having an amplitude decreasing from a nominal final value to zero through a plurality of individual periods of a basic AC signal.

17. The device of claim 10, wherein said driving means is a driving circuit, said circuit producing an actuation cycle having an amplitude increasing from zero to the desired final value through a plurality of individual periods of a basic AC signal and an amplitude decreasing from a nominal final value to zero through a similar plurality of individual periods of a basic AC signal.

18. A method of driving an electrostatic actuator having a pair of actuator plates having electrodes for conducting a voltage potential thereto, at least one of said pair being movable with respect to the other, said plates being positioned to move upon application of a voltage potential thereto by electrodes attached thereto, comprising the steps of
providing a voltage potential to said electrodes to cause said movement, said driving means producing a compounded AC signal comprising a rise section, a nominal section in which the AC signal has its nominal amplitude, and a fall section, with the rise section at least 10 to 100 times mechanical response time of the actuator and the fall section at least 10 to 100 times the mechanical response time of the actuator.

19. The method of claim 18, wherein said rise and fall sections are more than twenty times the period of said AC signal.

20. The method of claim 18, wherein the rise/fall sections are a quarter of a full period of said AC signal.

21. The method of claim 18, wherein only the nominal section of the compound AC signal is used for driving said touch mode actuator.

22. The method of claim 18, wherein said AC signal is selected from square-wave, sine wave, triangular wave and mixtures thereof.

23. The method of claim 18, wherein said signal produces an actuation cycle having an amplitude increasing from zero to the desired final value through a plurality of individual periods of a basic AC signal.

24. The method of claim 18, wherein said signal produces an actuation cycle having an amplitude decreasing from a nominal final value to zero through a plurality of individual periods of a basic AC signal.

25. The method of claim 18, wherein said signal produces an actuation cycle having an amplitude increasing from zero to the desired final value through a plurality of individual periods of a basic AC signal and an amplitude decreasing from a nominal final value to zero through a similar plurality of individual periods of a basic AC signal.

26. The method of claim 18, including the step of adjusting the frequency of the square wave AC signal and the rise fall times of the amplitude modulation to minimize stiction between said actuator plates.

## Patentansprüche

1. Elektrostatischer Betätiger mit:
einem Paar von Betätigerplatten, die Elektroden zum Zuleiten eines Spannungspotentials zu ihnen aufweisen, und wobei zumindest eine Platte des Paares relativ zu der anderen beweglich ist, wobei die Platten so positioniert sind, dass sie sich beim Anlegen eines Spannungspotentials durch die daran angebrachten Elektroden bewegen, und
einem Ansteuerungsmittel zur Bereitstellung eines Spannungspotentials für die Elektroden, um die Bewegung zu bewirken, wobei das Ansteuerungsmittel ein zusammengesetztes Wechselstromsignal mit einem Anstiegsabschnitt, einem Nennabschnitt, in dem das Wechselstromsignal seine Nennamplitude aufweist, und einem Abfallabschnitt erzeugt, wobei der Anstiegs- und der Abfallabschnitt jeweils zumindest das 10- bis 100fache der mechanischen Ansprechzeit des Betätigers betragen.

2. Vorrichtung nach Anspruch 1, wobei die Anstiegs/Abfallabschnitte mehr als das Zwanzigfache der Periode des Wechselstromsignals betragen.

3. Vorrichtung nach Anspruch 1, wobei die Anstiegs/Abfallabschnitte ein Viertel einer vollen Periode des Wechselstromsignals betragen.

4. Vorrichtung nach Anspruch 1, wobei nur der Nennabschnitt des zusammengesetzten Wechselstromsignals zur Ansteuerung des Betätigers verwendet wird.

5. Vorrichtung nach Anspruch 1, wobei das Wechselstromsignal eine Rechteckwelle, eine Sinuswelle, eine Dreieckswelle oder eine Mischung daraus ist.

6. Vorrichtung nach Anspruch 1, wobei das Ansteuerungsmittel eine Ansteuerschaltung ist, wobei die Schaltung einen Betätigungszyklus mit einem Anstiegsabschnitt erzeugt, in dem die Signalamplitude über eine Vielzahl einzelner Perioden des grundlegenden Wechselstromsignals von Null auf den erwünschten Endwert zunimmt.

7. Vorrichtung nach Anspruch 1, wobei das Ansteuerungsmittel eine Ansteuerschaltung ist, wobei die Schaltung einen Betätigungszyklus mit einem Abfallabschnitt erzeugt, in dem die Signalamplitude über eine Vielzahl einzelner Perioden des grundlegenden Wechselstromsignals von einem Nennendwert auf Null abnimmt.

8. Vorrichtung nach Anspruch 1, wobei das Ansteuerungsmittel eine Ansteuerschaltung ist, wobei die Schaltung einen Betätigungszyklus mit einem Anstiegsabschnitt, in dem die Signalamplitude über eine Vielzahl einzelner Perioden des grundlegenden Wechselstromsignals von Null auf den erwünschten Endwert zunimmt, und mit einem Abfallabschnitt erzeugt, in dem die Signalamplitude über eine ähnliche Vielzahl einzelner Perioden eines grundlegenden Wechselstromsignals von einem Nennendwert auf Null abnimmt.

9. Vorrichtung nach Anspruch 1, wobei der elektrostatische Betätiger ein elektrostatischer Betätiger mit Kontaktbetrieb ist.

10. Elektrostatischer Betätiger mit Kontaktbetrieb mit:
einem Paar von Betätigerplatten, die Elektroden zum Zuleiten eines Spannungspotentials zu ihnen aufweisen, und wobei zumindest eine der Platten relativ zu der anderen beweglich ist, wobei die Platten so positioniert sind, dass sie sich beim Anlegen eines Spannungspotentials durch die daran angebrachten Elektroden bewegen, und einem Ansteuerungsmittel zur Bereitstellung eines Spannungspotentials für die Elektroden, um die Bewegung zu bewirken, wobei: das Ansteuerungsmittel dafür ausgelegt ist, ein zusammengesetztes Wechselstromsignal mit einem Anstiegsabschnitt, einem Nennabschnitt, in dem das Wechselstromsignal seine Nennamplitude aufweist, und einem Abfallabschnitt zu erzeugen, wobei der Anstiegsund der Abfallabschnitt jeweils zumindest das 10- bis 100fache der mechanischen Ansprechzeit des Betätigers betragen.

11. Vorrichtung nach Anspruch 10, wobei die Anstiegs/Abfallabschnitte mehr als das Zwanzigfache der Periode des Wechselstromsignals betragen.

12. Vorrichtung nach Anspruch 10, wobei die Anstiegs/Abfallabschnitte ein Viertel einer vollen Periode des Wechselstromsignals betragen.

13. Vorrichtung nach Anspruch 10, wobei nur der Nennabschnitt des zusammengesetzten Wechselstromsignals zur Ansteuerung des Betätigers verwendet wird.

14. Vorrichtung nach Anspruch 10, wobei das Wechselstromsignal eine Rechteckwelle, eine Sinuswelle, eine Dreieckswelle oder eine Mischung daraus ist.

15. Vorrichtung nach Anspruch 10, wobei das Ansteuerungsmittel eine Ansteuerschaltung ist, wobei die Schaltung einen Betätigungszyklus mit einer Amplitude erzeugt, die über eine Vielzahl einzelner Perioden des grundlegenden Wechselstromsignals von Null auf den erwünschten Endwert zunimmt.

16. Vorrichtung nach Anspruch 10, wobei das Ansteuerungsmittel eine Ansteuerschaltung ist, wobei die Schaltung einen Betätigungszyklus mit einer Amplitude erzeugt, die über eine Vielzahl einzelner Perioden eines grundlegenden Wechselstromsignals von einem Nennendwert auf Null abnimmt.

17. Vorrichtung nach Anspruch 10, wobei das Ansteuerungsmittel eine Ansteuerschaltung ist, wobei die Schaltung einen Betätigungszyklus erzeugt, der eine Amplitude, die über eine Vielzahl einzelner Perioden eines grundlegenden Wechselstromsignals von Null auf den erwünschten Endwert zunimmt, und eine Amplitude aufweist, die über eine ähnliche Vielzahl einzelner Perioden eines grundlegenden Wechselstromsignals von einem Nennendwert auf Null abnimmt.

18. Verfahren zur Ansteuerung eines elektrostatischen Betätigers mit einem Paar von Betätigerplatten, die Elektroden zum Zuleiten eines Spannungspotentials zu ihnen aufweisen, wobei zumindest eine Platte des Paares relativ zu der anderen beweglich ist, wobei die Platten so positioniert sind, dass sie sich beim Anlegen eines Spannungspotentials durch die daran angebrachten Elektroden bewegen, mit folgenden Schritten:
Bereitstellung eines Spannungspotentials für die Elektroden, um die Bewegung zu bewirken, wobei das Ansteuerungsmittel ein zusammengesetztes Wechselstromsignal mit einem Anstiegsabschnitt, einem Nennabschnitt, in dem das Wechselstromsignal seine Nennamplitude aufweist, und einem Abfallabschnitt erzeugt, wobei der Anstiegsabschnitt zumindest das 10-bis 100fache der mechanischen Ansprechzeit des Betätigers beträgt und der Abfallabschnitt zumindest das 10- bis 100fache der mechanischen Ansprechzeit des Betätigers beträgt.

19. Verfahren nach Anspruch 18, wobei die Anstiegs- und Abfallabschnitte mehr als das Zwanzigfache der Periode des Wechselstromsignals betragen.

20. Verfahren nach Anspruch 18, wobei die Anstiegs/Abfallabschnitte ein Viertel einer vollen Periode des Wechselstromsignals betragen.

21. Verfahren nach Anspruch 18, wobei nur der Nennabschnitt des zusammengesetzten Wechselstromsignals zur Ansteuerung des Betätigers mit Kontaktbetrieb verwendet wird.

22. Verfahren nach Anspruch 18, wobei das Wechselstromsignal eine Rechteckwelle, eine Sinuswelle, eine Dreieckswelle oder eine Mischung daraus ist.

23. Verfahren nach Anspruch 18, wobei das Signal einen Betätigungszyklus mit einer Amplitude erzeugt, die über eine Vielzahl einzelner Perioden eines grundlegenden Wechselstromsignals von Null auf den erwünschten Endwert zunimmt.

24. Verfahren nach Anspruch 18, wobei das Signal einen Betätigungszyklus mit einer Amplitude erzeugt, die über eine Vielzahl einzelner Perioden eines grundlegenden Wechselstromsignals von einem Nennendwert auf Null abnimmt.

25. Verfahren nach Anspruch 18, wobei das Signal einen Betätigungszyklus mit einer Amplitude, die über eine Vielzahl einzelner Perioden eines grundlegenden Wechselstromsignals von Null auf den erwünschten Endwert zunimmt, und mit einer Amplitude, die über eine ähnliche Vielzahl einzelner Perioden eines grundlegenden Wechselstromsignals von einem Nennendwert auf Null abnimmt, erzeugt.

26. Verfahren nach Anspruch 18, mit dem Schritt des Einstellens der Frequenz des Wechselstromsignals in Form einer Rechteckwelle und der Anstiegs-/Abfallzeiten der Amplitudenmodulation, um die Haftreibung zwischen den Betätigerplatten zu minimieren.

## Revendications

1. Dispositif de commande électrostatique, comprenant :
une paire de plaques de commande ayant des électrodes pour conduire un potentiel de tension à travers elles et où au moins une plaque de ladite paire est mobile par rapport à l'autre, lesdites plaques étant positionnées pour se déplacer lors de l'application à celles-ci d'un potentiel de tension par les électrodes qui sont fixées sur elles ; et
un moyen d'attague pour appliquer un potentiel de tension auxdites électrodes pour causer ledit mouvement, ledit moyen d'attaque produisant un signal de courant alternatif (c.a.) composé comprenant une section de montée, une section nominale dans laquelle le signal c.a. est à son amplitude nominale, et une section de baisse, où les sections de montée et de baisse sont chacune au moins 10 à 100 fois le temps de réponse mécanique du dispositif de commande.

2. Dispositif selon la revendication 1, dans lequel les sections de montée/de baisse sont plus de vingt fois la période dudit signal c.a.

3. Dispositif selon la revendication 1, dans lequel les sections de montée/de baisse sont un quart d'une période entière dudit signal c.a.

4. Dispositif selon la revendication 1, dans lequel seule la section nominale du signal c.a. composé est utilisée pour l'entraînement du dispositif de commande.

5. Dispositif selon la revendication 1, dans lequel ledit signal c.a. est sélectionné parmi les ondes carrées, les ondes sinusoïdales, les ondes triangulaires et des mélanges de celles-ci.

6. Dispositif selon la revendication 1, dans lequel ledit moyen d'attaque est un circuit d'attaque, ledit circuit produisant un cycle de commande ayant une section de montée dans laquelle l'amplitude du signal monte de zéro à la valeur finale désirée en passant par une pluralité de périodes individuelles du signal c.a. de base.

7. Dispositif selon la revendication 1, dans lequel ledit moyen d'attaque est un circuit d'attaque, ledit circuit produisant un cycle de commande ayant une section de baisse dans laquelle l'amplitude du signal baisse de la valeur finale désirée à zéro en passant par une pluralité de périodes individuelles du signal c.a. de base.

8. Dispositif selon la revendication 1, dans lequel ledit moyen d'attaque est un circuit d'attaque, ledit circuit produisant un cycle de commande ayant une section de montée dans laquelle l'amplitude du signal monte de zéro à la valeur finale désirée en passant par une pluralité de périodes individuelles du signal c.a. de base et une section de baisse dans laquelle l'amplitude du signal baisse d'une valeur nominale finale à zéro en passant par une pluralité similaire de périodes individuelles du signal c.a. de base.

9. Dispositif selon la revendication 1, où ledit dispositif de commande électrostatique est un dispositif de commande électrostatique à contact.

10. Dispositif de commande électrostatique à contact comprenant :
une paire de plaques de commande ayant des électrodes pour conduire un potentiel de tension à travers elles et où au moins une desdites plaques est mobile par rapport à l'autre, lesdites plaques étant positionnées pour se déplacer lors de l'application à celles-ci d'un potentiel de tension par les électrodes qui sont fixées sur elles ; et
un moyen d'attaque pour appliquer un potentiel de tension auxdites électrodes pour causer ledit mouvement ; dans lequel,
le moyen d'attaque est adapté pour produire un signal c.a. composé comprenant une section de montée, une section nominale dans laquelle le signal c.a. est à son amplitude nominale, et une section de baisse, où les sections de montée et de baisse sont chacune au moins 10 à 100 fois le temps de réponse mécanique du dispositif de commande.

11. Dispositif selon la revendication 10, dans lequel les sections de montée/de baisse sont plus de vingt fois la période dudit signal c.a.

12. Dispositif selon la revendication 10, dans lequel les sections de montée/de baisse sont un quart d'une période entière dudit signal c.a.

13. Dispositif selon la revendication 10, dans lequel seule la section nominale du signal c.a. composé est utilisée pour l'entraînement du dispositif de commande.

14. Dispositif selon la revendication 10, dans lequel ledit signal c.a. est sélectionné parmi les ondes carrées, les ondes sinusoïdales, les ondes triangulaires et des mélanges de celles-ci.

15. Dispositif selon la revendication 10, dans lequel ledit moyen d'attaque est un circuit d'attaque, ledit circuit produisant un cycle de commande ayant une amplitude qui monte de zéro à la valeur finale désirée en passant par une pluralité de périodes individuelles du signal c.a. de base.

16. Dispositif selon la revendication 10, dans lequel ledit moyen d'attaque est un circuit d'attaque, ledit circuit produisant un cycle de commande ayant une amplitude qui baisse d'une valeur finale nominale à zéro en passant par une pluralité de périodes individuelles d'un signal c.a. de base.

17. Dispositif selon la revendication 10, dans lequel ledit moyen d'attaque est un circuit d'attaque, ledit circuit produisant un cycle de commande ayant une amplitude qui monte de zéro à la valeur finale désirée en passant par une pluralité de périodes individuelles d'un signal c.a. de base et une amplitude qui baisse d'une valeur nominale finale à zéro en passant par une pluralité similaire de périodes individuelles d'un signal c.a. de base.

18. Procédé d'attaque d'un dispositif de commande électrostatique ayant une paire de plaques de commande ayant des électrodes pour conduire un potentiel de tension à travers elles, et où au moins une desdites plaques est mobile par rapport à l'autre, lesdites plaques étant positionnées pour se déplacer lors de l'application à celles-ci d'un potentiel de tension par les électrodes qui sont fixées sur elles, comprenant les étapes consistant à :
appliquer un potentiel de tension auxdites électrodes pour causer ledit mouvement, ledit moyen d'attaque produisant un signal c.a. composé comprenant une section de montée, une section nominale dans laquelle le signal c.a. est à son amplitude nominale, et une section de baisse, où la section de montée est au moins 10 à 100 fois le temps de réponse mécanique du dispositif de commande et la section de baisse est au moins 10 à 100 fois le temps de réponse mécanique du dispositif de commande.

19. Procédé selon la revendication 18, dans lequel lesdites sections de montée et de baisse sont plus de vingt fois la période dudit signal c.a.

20. Procédé selon la revendication 18, dans lequel les sections de montée et de baisse sont un quart d'une période entière dudit signal c.a.

21. Procédé selon la revendication 18, dans lequel seule la section nominale du signal c.a. composé est utilisée pour l'entraînement dudit dispositif de commande à contact.

22. Procédé selon la revendication 18, dans lequel ledit signal c.a. est sélectionné parmi les ondes carrées, les ondes sinusoïdales, les ondes triangulaires et des mélanges de celles-ci.

23. Procédé selon la revendication 18, dans lequel ledit signal produit un cycle de commande ayant une amplitude qui monte de zéro à la valeur finale désirée en passant par une pluralité de périodes individuelles d'un signal c.a. de base.

24. Procédé selon la revendication 18, dans lequel ledit signal produit un cycle de commande ayant une amplitude qui baisse d'une valeur finale désirée à zéro en passant par une pluralité de périodes individuelles d'un signal c.a. de base.

25. Procédé selon la revendication 18, dans lequel ledit signal produit un cycle de commande ayant une amplitude qui monte de zéro à la valeur finale désirée en passant par une pluralité de périodes individuelles d'un signal c.a. de base et une amplitude qui baisse d'une valeur nominale finale à zéro en passant par une pluralité similaire de périodes individuelles d'un signal c.a. de base.

26. Procédé selon la revendication 18, comprenant l'étage qui consiste à régler la fréquence du signal c.a. à onde carrée et les temps de montée et de baisse de la modulation d'amplitude pour minimiser le frottement statique entre lesdites plaques de commande.
